# EUROPEAN PATENT APPLICATION

(11) **EP 0 596 159 A1**
(43) Date of publication of application: **11.05.1994**
(21) Application number: 92203388.1
(22) Date of filing: 05.11.1992
(51) Int. Cl.: H04L 12/56

(54) **Policing device and policing method using same**

(71) Applicant: ALCATEL N.V., NL-1077 XX Amsterdam (NL); BELL TELEPHONE MANUFACTURING COMPANY Naamloze Vennootschap, B-2018 Antwerp (BE)
(72) Inventor: Pauwels, Bart Joseph Gerard, B-2140 Borgerhout (BE); Therasse, Yves, B-1450 Chastre (BE)
(74) Representative: Vermeersch, Robert (BE)

(57) **Abstract**

The proposed policing device includes selection means (SEL) to form a composite information stream which consists of the information units of a plurality of individual information streams. In this way the policing device can for instance police more efficiently information streams carrying bursty traffic. Indeed, a composite stream, formed from a plurality of such individual information streams, has, due to the statistical properties of such information streams, a less bursty information rate which can be characterized much more efficiently. Hence also the policing algorithm (PA1;..;PAN) used to police the composite stream will be much less complicated than the policing algorithm needed to police the separate streams carrying bursty traffic.

Moreover can such a policing device inherently detect correlation between the information rates of the streams grouped together in such a composite stream. The detection of such correlation is very advantageous in an ATM network which presupposes that these information rates are uncorrelated.

## Description

The present invention relates to a policing device and to a policing method in which such a device is used and which are particularly suited for use in Asynchronous Transfer Mode (ATM) networks.

Policing devices are already known in the art, e.g. from the article "The policing function in an ATM network" by F. Denissen et al., Proc. of the 1990 International Zurich Seminar on Digital Communications, pp. 131-144, Zurich, March 1990. Therein, the policing device, mounted at the edge of the network, executes a policing algorithm on a particular information stream transmitted to this network by a subscriber station. The proposed policing device monitors a particular information stream to find out if it behaves according to transmission characteristics negotiated at call set-up time in order to protect the network from malicious users deliberately violating these characteristics and also from faults in the network having a similar effect. If these characteristics are violated the policing device discards at least some information units from the monitored information stream so that the resulting policed information stream behaves according to the negotiated characteristics.

As described in detail in the mentioned article such policing is vital in an ATM network because the reliable operation of such a network can only be guaranteed if each information stream behaves according to the mentioned negotiated characteristics. Indeed, one of the important features of an ATM network is the statistical multiplexing gain, i.e. information streams supplied to it and having a variable information rate are supposed to have uncorrelated information rates and therefore these information streams can generally be multiplexed on links having a smaller bandwidth capacity as would be indicated by the sum of the peak information rates of the multiplexed information streams. This statistical multiplexing gain can obviously only be guaranteed, without risking an overload of the transmission links and switching fabrics included in the network, if the information streams behave according to their negotiated characteristics.

From the above article it thus follows that policing is of the utmost importance in ATM networks. However, the known policing device does not solve all problems associated to the above described policing efficiently. Indeed, the policing algorithms executed by the known device and described in the referenced article - e.g. the preferred algorithm presented in section 5.3 thereof as gabarit policing - use as criterion the distribution function of the information rate to check whether the negotiated characteristics are violated or not. Such an algorithm becomes relatively complex for information streams carrying very bursty traffic such as e.g. signalling channels and channels dedicated to con- nectionless services since the distribution function of the information rates associated thereto are relatively difficult to be characterized. In using a simpler policing algorithm, such as e.g. the peak information rate policing, also proposed in the above article, the results of the policing will are however not satisfactory since subscriber stations could send their information, despite of the negotiated characteristics, at a fixed information rate substantially equal to the mentioned peak information rate.

An object of the present invention is to provide a policing device of the above known type but wherein the above problem of policing information streams carrying bursty traffic is efficiently dealt with.

According to the invention, this object is achieved due to the fact that said policing device is adapted to derive from a composite information stream, consisting of information units of a plurality of information streams, a discard signal associated to said composite information stream and indicating for each of said information units wether it causes said composite stream to violate at least one predetermined characteristic, said policing device including processing means applying to said composite stream an associated instance of a policing algorithm based on said predetermined characteristic, and that the individual information streams included in said plurality of information streams are chosen according to predetermined network policing requirements.

If the plurality of information streams is e.g. so chosen as to include a number of the mentioned information streams carrying very bursty traffic, the corresponding composite stream behaves less bursty, due to the statistical properties of multiplexing such streams. The composite stream can hence be described more accurately and therefore also policed more efficiently. The above choice is then clearly made based on network policing requirements, i.e. on the requirement to police bursty information streams as efficiently as possible; other examples of such choices are for instance a grouping based on the service type, e.g. a grouping of signalling channels, a grouping of information streams of a same subscriber in order to detect if such information streams are unallowably correlated or a grouping based on the negotiated quality of service.

An advantage of the above is that a lot of policing hardware can be saved with respect to the known device where each information stream had to be policed separately. Indeed, in the proposed policing device, only one instance of the policing algorithm has to be provided for the plurality of information streams with the added advantage that this algorithm may be simpler than that needed when policing all information streams separately.

A further significant advantage of the proposed policing device is that it can inherently detect correlation between the information rates of information streams included in the plurality of information streams. Such correlation is very harmful as mentioned above because it violates the requirements for the statistical multiplexing gain. This gain can clearly not be achieved if different sources are correlated. The prior art devices policing only single information streams can thus not avoid that a malicious user correlates different sources and so effectively overloads the network damaging the quality of service of other users.

Due to the latter advantage it is also clear that the present policing device can also be used solely to detect correlation between information streams forwarding the derived discard signal only to a network controller which can then take appropriate actions to remove such correlation. Obviously the policing device can also be used, as in the known device, in combination with a discard means discarding information units in order to obtain a policed stream having predetermined characteristics.

Another characteristic feature of the present invention is that an information stream identifier is associated to each of said information units identifying to which information stream said unit belongs, that said processing means includes selection means including an associated table of information stream identifiers comprising all identifiers of said plurality of information streams, and that said selection means activates said associated instance for each information unit the identifier of which is included in said table.

Particularly in an ATM network where a same link may be shared between a number of information streams or virtual circuits, the proposed selection means gives a simple solution for selecting the appropriate information units to be policed jointly. By using the information stream identifier, this selection can moreover be easily adapted to include in the plurality of information streams to be policed precisely those information streams for which the joint policing is most advantageous from a network policing point of view, e.g. the information streams carrying signalling information. In ATM networks for instance the lists of identifiers can be continuously reprogrammed to respond to the continuous variations of the connections present in the network in order to form the most appropriate sets of information streams.

A characteristic of the present invention is that said policing device is further adapted to derive from each further composite information stream, including all information units of a corresponding set of at least one information stream, an associated discard signal indicating for each of said included information units wether it causes said composite stream to violate at least one predetermined second characteristic, said processing means thereto applying to said composite stream an associated instance of a policing algorithm based on said second characteristic, and that said selection means includes for each further information stream an associated table of information stream identifiers comprising all identifiers of said corresponding set, and that said selection means activates said associated instance for each information unit the identifier of which is included in said associated table.

In this way the hardware of the policing device is shared between several composite streams, the plurality of tables of identifiers being for instance embodied by a single shared translation memory having as input the identifier of an information unit and as output activation signals activating those instances for which the mentioned unit forms a part of the associated composite stream.

The above characteristic, however, more importantly allows for an important aspect of the present invention which is that at least one of said information stream identifiers is included in at least two of said associated tables of identifiers.

In so doing a particular information stream can be policed simultaneously within the context of different composite streams. This means that one information stream can for instance simultaneously be policed separately, e.g. to ensure that a user respects the bandwidth parameters for which he pays, and jointly, e.g. in order to detect correlation between this particular stream and other streams.

Such policing at subsequent levels is very advantageously carried out by the present policing device by executing as many instances of policing algorithms as the number of tables in which an identifier of a particular information unit is included. Each policing algorithm is based on the desired characteristics of its associated composite stream which are linked to its associated table of identifiers.

The present device can moreover very efficiently detect correlation between different information streams at different levels of grouping, i.e. between a set of 2, 4,... information streams, and react so as to protect the network against the consequences of such correlation. Associated herewith is the possibility to achieve a higher multiplexing gain without overloading the network. Indeed, with the present device a particular information stream can be simply policed at subsequent levels of grouping, it can e.g. be policed separately and at levels in which progressively more information streams are grouped to be policed jointly. At each of these levels it can be assured that the instantaneous datarate of the policed stream is smaller than the available datarate for the sum of the datarates in an associated set. In this way one can derive, in a very controlled way, whilst keeping the used processing algorithms optimally simple, a global policed stream corresponding to the highest level of grouping which is such that the theoretical multiplexing gain is substantially attained without running the risk that the switching fabric or transmission link coupled to the policing device becomes overloaded.

It has to be noted that a specific but very important embodiment of the present invention can be used to fulfill a requirement put forth in the CCITT draft recommendation 1.371, pp. 20-21, June 1992, Geneva for ATM networks. This recommendation specifies that within each virtual connection in the network priority cells of that connection should be policed separately whilst the total virtual connection should also be policed as a whole. It is clear from the above that such specification can be met by the present policing device.

It is to be further noted that the various discard signals which are so obtained by the policing device can be used by the network to detect malicious users and network faults by interpreting these discard signals as correlation indicators.

Still another important feature of the present invention is that said policing device is tested by activating in parallel with an instance of a policing algorithm associated to a composite stream including a present information unit, another instance of a policing algorithm dedicated to another composite stream not including said present information unit, both said instances starting from the same initial conditions and performing a same algorithm based on a same characteristic and in that a fault condition is signalled if the corresponding discard signals differ.

As mentioned above the policing function is vital in e.g. ATM networks wherefore it should be continuosly tested so that a malfunction is quickly detected. The above requires a real time test during the operation of the policing device. Conventionally, e.g. in the prior art system, such real time test can only be provided via the duplication of the police logic and a fault will in this case be signalled if the two parts of the police logic, one part of which is totally redundant apart from the testing facility, give different results.

Such a waste of area and hardware can in the above way be avoided in the present policing device. Due to the high level of sharing of hardware, the above feature is functionally equivalent to the duplication of the policing logic without, however, having to add redundant hardware for the testing facility.

Still a further characteristic feature of the present invention is that said policing device is tested by activating in parallel with an instance of a policing algorithm associated to a composite stream including a particular information stream, an instance of a policing algorithm associated to a composite stream not including said particular information stream, both said instances performing a same algorithm based on a same characteristic and in that a fault condition is signalled if the corresponding discard signals differ. The above feature allows the earlier mentioned

testing when information streams are applied to the policing device which are never dealt with by a particular instance of a policing algorithm. Again the testing does not require redundant hardware exclusively for the testing facility. The latter feature however allows such advantageous testing even when each instance uses a separate and isolated memory to store its results and its initial conditions for a next information unit. In this case the former testing strategy is not viable due to the fact that an instance cannot retrieve the initial conditions of another instance.

As mentioned higher the present invention also relates to a policing method in which such a policing device is used.

The policing method disclosed in the above referenced article consists simply in policing separate information streams at the edge of the local exchange. Such a method has as primary advantage that the policing is performed essentially at the subscriber level which results in obvious advantages for the tariffing in the network and the localization of eventual malicious users.

However, as is already clear from the above this simple policing method does not suffice to efficiently solve all problems associated with the policing requirements of for instance ATM networks for instance in policing information streams with a very bursty information stream.

A further object of the present invention is to propose a policing method of the above known type but without the above mentioned shortcoming.

This object is achieved due to the fact that the policing method includes a plurality of policing steps in each of which an instance of a policing algorithm is applied to information units included in a particular information stream in order to check wether or not one of said information units is to be discarded dependent upon predetermined network policing requirements, and that at least one of said steps consists in deriving from a composite stream, including all information units included in a plurality of information streams chosen according to said predetermined requirements, a policed information stream having at least one characteristic corresponding to said predetermined requirements by applying an instance of a policing algorithm based on said characteristic to said composite stream in order to derive a discard signal associated to said information units and by discarding based on said discard signal a corresponding information unit from said composite stream, said policed stream consisting of all not-discarded information units and said plurality of information streams including said particular information stream.

By including at least one policing step in which a policing device of the above basic type is used, it is possible to design this policing method so that it realizes a distributed version of the above mentioned policing device able to perform policing at subsequent levels of grouping. This means that the essential subscriber oriented policing as described in the above article can be included in this method whilst remedying its mentioned shortcomings.

It could for instance also be that policing at subsequent levels cannot be performed in a single device because of intermediate multiplexing stages where advantage must be taken of the multiplexing gain. In such a case the present method again gives a way to nevertheless procure all advantages of policing at subsequent levels of grouping.

An inherent advantage of this method also is that such policing at subsequent levels leads to a possible simplification of the policing algorithms used therein.

Finally, it has to be noted that the above method can be used in conjunction with any type of policing device as described above within the scope of the invention.

The above mentioned and other objects and features of the invention will become more apparent and the invention itself will be best understood by referring to the following description of an embodiment taken in conjunction with the accompanying drawings wherein:
Fig. 1 shows a schematic diagram of a policing device according to the present invention, and,
Fig. 2 shows a processing means of a policing device of the type shown in Fig. 1 which is used in an Asynchronous Transfer Mode (ATM) network.

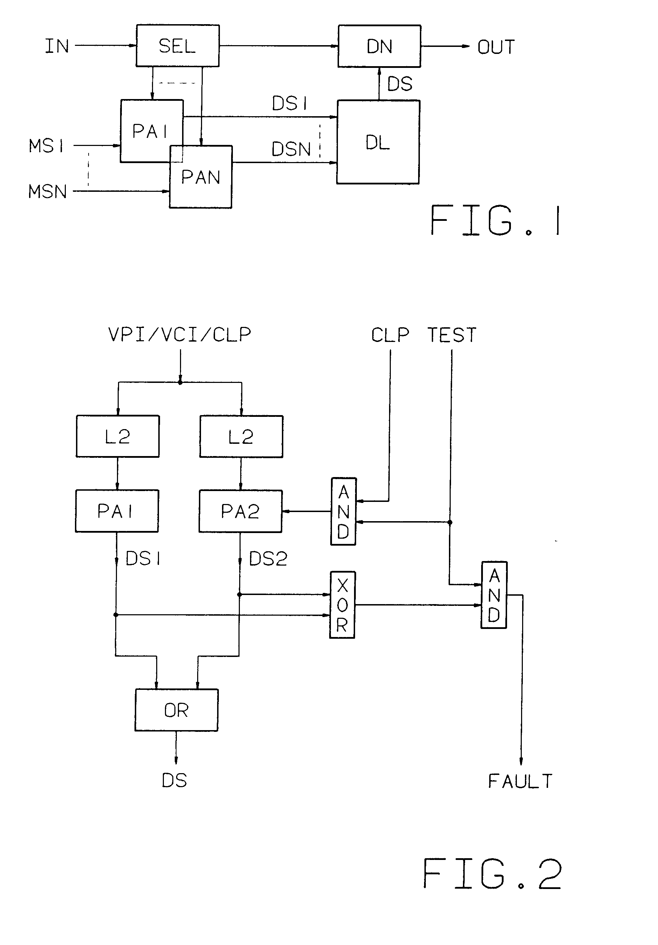

The policing device shown in Fig. 1 is used in an Asynchronous Transfer Mode ATM network (not shown). Generally this policing device receives via its input terminal IN information units (packets) of a plurality of information streams. Each of these units consists of a header, a.o. including an identifier which identifies to which information stream this unit belongs, and an information part, carrying the actual data. The policing device discards some of these information units received on IN depending upon a discard signal DS as described in detail below and so produces an output stream OUT applied on a like named terminal OUT. OUT can thus include only a part of the information units received on IN and can be interpreted as consisting of a number of policed streams as also clarified below.

The information units received on IN are applied to selection means SEL interpreting for each information unit its associated identifier as described below. According to this interpretation SEL activates one or more instances of policing algorithms PA1;..;PAN each of which generates a corresponding discard signal DS1;..;DSN associated to the information unit under consideration and is controlled by a corresponding monitor signal MS1;..;MSN generated by a network controller (not shown). The instances PA1;..;PAN activate their corresponding discard signal DS1;..;DSN only if the result of the application of the algorithm is that the mentioned information unit is to be discarded and if its corresponding monitor signal MS1;..;MSN is reset by the network controller which means that the information obtained by the policing instances is to be exclusively used as a correlation indicator as described below. The discard signals DS1;..;DSN are then combined by discard logic DL, which for instance performs a logical or'ing of DS1;..;DSN, to form a discard signal DS which is applied to a discard means DM. DS is set if the current information unit is according to PA1;..;PAN to be discarded and DM then acts accordingly. Otherwise, DM just passes the present unit to OUT.

It is to be noted that the previously discussed operational parts SEL, PA1;..;PAN and DL are embodied by a processing means of the presently discussed policing device. PA1;..;PAN can either be executed by separate processors or at least some of them can be executed by a single processor operating at a multiple of a basic clock frequency with which information units are received on IN.

The selection means SEL of the above described policing device includes N tables each including a list of information stream identifiers. Each list defines a set of information streams which are to be policed as one single stream. For each information unit received on IN SEL checks in which of the N tables its associated identifier is included. SEL accordingly activates those instances PA1;..;PAN which correspond to those tables in which the mentioned identifier is included. It is to be noted that the mentioned N tables may be incorporated in SEL by a shared translation memory which is addressed by the identifier of an information unit and which stores for each such possible identifier a list of which instances should be activated for such an identifier.

In this way each of the instances PA1;..;PAN effectively police corresponding composite information streams which consist of all information units of the information streams listed in a corresponding table. If a presently considered information unit is such that it would make the characteristics of an associated composite stream unacceptable with respect to some predetermined characteristics set by the network controller, the corresponding instance PA1;..;PAN sets its corresponding discard signal DS1;..;DSN. As described above the discard logic DL logically or's all these discard signals DS1;..;DSN so that if one of them is set the output DS of DL is also set. It is to be noted that in the above it is implicitly understood that if an instance PA1;..;PAN is not activated its corresponding discard signal DS1;..;DSN remains reset. Finally when DM receives a DS which is set it discards the present information unit.

In the above way the policing device generates at OUT a stream which can be considered as built up from N policed streams, each of the latter streams having a predetermined characteristic, such as e.g. a datarate below a predetermined peak datarate. It has to be noted in this respect that the exact nature of these policing algorithms and of their predetermined characteristics are not described in detail here as the policing device can be used in conjunction with any type of such algorithms and such characteristics and as many of such types are well known by a person skilled in the art. Also are the processing means not described in more detail as a person skilled in the art can from the above description easily design such a processing means.

The present invention has indeed to be appreciated in the fact that the policing device is so structured that it can in a simple way police jointly different information streams in a flexible way based on their information stream identifiers.

By including a particular identifier in a plurality of tables within SEL, the associated information stream is simultaneously policed at different levels of grouping, e.g. separately and within sets of 2, 4,... information streams. Indeed, when an information unit of this information stream is received by the policing device a plurality of instances of policing algorithms PA1;..;PAN are activated by SEL, and each of these activated instances considers this information unit as part of a larger composite information stream. It can be easily verified that in this way this information stream can, for instance, be simultaneously policed separately and within progressively larger sets of information streams. The latter type of policing has distinct advantages in that the multiplexing gain can be obtained in a highly controlled manner whilst the policing algorithms themselves can be kept quite simple. It has to be noted that in such a case where an information stream is policed at different levels simultaneously the output stream OUT consists of several overlapping policed streams.

From the above it is further clear that the various discard signals DS1;..;DSN also carry information concerning the correlation of the information rates of different information streams policed as one composite stream by a corresponding instance of a policing algorithm. Such information is clearly interesting for the network controller in localizing malfunctioning network parts or malicious users, who deliberately correlate the information rates of different information streams. The discard signals can thus advantageously be forwarded to this controller as a correlation indicator. More generally it is possible in the present policing device to use the instances PA1;..;PAN exclusively for the detection of such correlations without using the associated discard signal to make a discard decision. Therefore the monitor signals MS1;..;MSN can for instance be partly set by the network controller in order to keep the corresponding discard signal DS1;..;DSN reset, i.e. void for the discard means DM, whilst the corresponding instance monitors the correlation between a set of streams exactly as described above, but now only forwarding the result of the application of the algorithm to the network controller and no longer to the discard logic DL.

A final remark concerning the general operation of the policing device is that some control logic (not shown) has to be provided for communicating the final discard signal DS to the different instances PA1;..;PAN so that none of these instances take into account those information units which are discarded based on the discard signal of another instance and, equivalently, that all instances take into account those information units for which they were activated and which are not discarded. The latter case might arise when an instance is exclusively used to derive, under control of its corresponding monitor signal MS1;..;MSN, a correlation indicator as mentioned above and arrives at a discard decision which is not passed on to the discard logic DL, whilst none of the other instances arrive at such a discard decision. The instances have then to take into account that although the result of the algotithm was to discard a unit, the latter was not discarded in the end. The derivation of such control logic is well within the capabilities of a skilled person wherefore it will not be described in any detail.

The above and other features will be further clarified by the description of a specific embodiment of the processing means which is used in an ATM network and is schematically shown in Fig. 2.

The processing means receives as input signals VPI/VCI/CLP the identifiers of each information unit applied to the policing device. As is well known in the ATM field this identifier consists of a virtual path identifier VPI, a virtual circuit identifier VCI and a cell loss priority bit CLP. The processor means derives therefrom, as described hereafter, for each such information unit a discard signal DS to be used by the policing device as mentioned higher and an indicator FAULT indicating if the processor means still operates correctly.

The processing means therefore checks wether the identifier VPI/VCI/CLP is included in a first and second table, L1 and L2 respectively, and if so it activates corresponding instances of a policing algorithm, PA1 and PA2 respectively. The activated instances set, in the above described way, a first and a second discard signal, DS1 and DS2 respectively, if the present information unit is to be discarded according to the requirements of PA1 and PA2 respectively. DS1 and DS2 are then applied to an OR gate the output of which is the discard signal DS to be applied to the above described discard means DM.

If PA2 is not activated by L2 and if the output of an AND gate, to which two signals CLP and TEST are applied, is set PA2 is controlled to execute the same algorithm as PA1 with the same initial conditions in order to test the correct behaviour of the hardware, e.g. the memory, included in the processing means. CLP is the aforementioned cell loss priority bit CLP and TEST is a test signal. DS1 and DS2 are both applied to a XOR-gate whose output is applied together with TEST to a further AND gate which outputs the FAULT signal.

In the present embodiment the table L1 includes the identifiers of two information streams both having a same virtual circuit identifier VCI, a same virtual path identifier VPI but the first information stream having a cell loss priority bit O whilst the second stream has a CLP bit 1. The table L2 however only includes the identifier of the above mentioned first stream. In this way, PA1 polices a stream consisting of all information units of a virtual connection whereas PA2 polices only a stream including the information units with CLP bit 0. The latter priority bits will in this way be both discarded if the total virtual connection exceeds its negotiated bandwidth characteristics and if the priority units alone exceed these negotiated characteristics because the signals DS1 and DS2 are applied to the OR gate whose output is the discard signal DS.

From the above it further follows that the virtual connection is policed in a simple way according to the CCITT draft recommendation 1.371, pp. 20-21, June 1992, Geneva for ATM networks. This recommendation indeed specifies that the information units with CLP bit 1 should be policed separately but that the total connection, including the latter units, should also be policed jointly.

An advantageous feature of the processing means as described above is its testing facility. Indeed, if an information unit whose CLP bit is 1 is handled by the policing device, then PA2 remains idle. This idle moment can be used for testing the processing means as described hereafter.

If TEST and CLP are both set PA2 retrieves, from a memory (not shown) included in the processing means, the initial conditions which are also used by PA1, and which are for the present use by PA2 stored in other memory locations of the processor memory, and simulates its operation therefrom. If the resulting DS1 and DS2 signals don't have the same logical value the output of the XOR gate and hence also FAULT are set. If FAULT is set it is quite clear that the processing means has at least one faulty part and FAULT can therefore be used to indicate such faulty part whereafter the policing device may be substituted by a new device in which such fault is not present. Such testing can in an obvious way be further improved by systematically changing the memory locations in which the above initial conditions are stored.

If the instances PA1 and PA2 are separate hardware modules using a separate memory the above scheme is not feasible due to the fact that the initial conditions cannot be retrieved by PA2. In this case a similar testing facility can still be incorporated in the present policing device as a number of information streams or virtual circuits to be policed by this device do not use the option of priority units. For such information streams it is clear that PA2 remains idle and can therefore be used to simulate the operation of PA1 but now for the complete information stream so that it does not have to retrieve the initial conditions used by PA1.

The above way of testing avoids the need for duplicating the policing device and so avoids a waste of hardware. The latter testing principle can of course generally be used in any type of policing device as described above in which two distinct tables of identifiers are used.

Finally, it has to be noted that the advantages associated with the above policing at multiple levels can also be procured by using a policing method in the ATM network in which a first policing step consists of policing an information stream separately in a separate policing device whilst a further policing step is executed by a policing device situated downstream of the first device and in which the mentioned information stream is policed jointly with other information streams as described above. The latter policing device may be of a very simple type according to the above general description, it may e.g. include only one table of identifiers.

While the principles of the invention have been described above in connection with specific apparatus, it is to be clearly understood that this description is made only by way of example and not as a limitation on the scope of the invention.

## Claims

1. Policing device for a telecommunications network and adapted to derive from a composite information stream, consisting of information units of a plurality of information streams, a discard signal (DS1) associated to said composite information stream and indicating for each of said information units wether it causes said composite stream to violate at least one predetermined characteristic, said policing device including processing means applying to said composite stream an associated instance of a policing algorithm (PA1) based on said predetermined characteristic.

2. Policing device according to claim 1, characterized in that the individual information streams included in said plurality of information streams are chosen according to predetermined network policing requirements.

3. Policing device according to claims 1 or 2, characterized in that an information stream identifier (VPI/VCI/CLP) is associated to each of said information units identifying to which information stream said unit belongs, that said processing means includes selection means (SEL) including an associated table of information stream identifiers comprising all identifiers of said plurality of information streams, and that said selection means activates said associated instance (PA1) for each information unit the identifier of which is included in said table.

4. Policing device according to claim 3, characterized in that said policing device is further adapted to derive from each further composite information stream, including all information units of a corresponding set of at least one information stream, an associated discard signal (DS1;..;DSN) indicating for each of said included information units wether it causes said composite stream to violate at least one predetermined second characteristic, said processing means thereto applying to said composite stream an associated instance (PA1;..PAN) of a policing algorithm based on said second characteristic, and that said selection means (SEL) includes for each further information stream an associated table of information stream identifiers comprising all identifiers of said corresponding set, and that said selection means activates said associated instance for each information unit the identifier (VPI/VCI/CLP) of which is included in said associated table.

5. Policing device according to claim 4, characterized in that at least one of said information stream identifiers is included in at least two of said associated tables of identifiers.

6. Policing device according to claim 5, characterized in that said policing device further includes discard means (DL, DM) discarding an information unit if at least one associated discard signal (DS1;..;DSN) indicates to do so, said policing device in this way generating policed streams each of which is associated with one of said composite streams.

7. Policing device according to any of the claims 1 to 5, characterized in that said discard signals (DS1;..;DSN) are used by said telecommunications network as correlation indicators to indicate wether the information rates of a corresponding plurality of information streams are correlated or not.

8. Policing device according to claims 6 and 7, characterized in that at least one of said instances (PA1;..PAN) can be controlled by a monitor control signal (MS1;..;MSN) to use a discard signal derived by said one instance excusively as a correlation indicator, said associated discard signal (DS1;..;DSN) being void for said discard means (DL, DM) which discards an information unit if at least one of its associated discard signals which are not void indicates to do so.

9. Policing device according to any of the previous claims, characterized in that said information streams have a variable information rate, and that said policing device forms part of an asynchronous transfer mode network.

10. Policing device according to claims 6 and 9, characterized in that said information stream identifier (VPI/VCI/CLP) includes a cell loss priority bit (CLP) and that a first one of said tables (L2) includes a first identifier in which a cell loss priority bit is zero whereas a second one of said tables (L1) includes said first identifier and a corresponding identifier in which said cell loss priority bit is one.

11. Policing device according to any of the claims 8 to 10, characterized in that said policing device is tested by activating in parallel with an instance (PA1) of a policing algorithm associated to a composite stream including a present information unit, another instance (PA2) of a policing algorithm dedicated to another composite stream not including said present information unit, both said instances (PA1;PA2) starting from the same initial conditions and performing a same algorithm based on a same characteristic and in that a fault condition (FAULT) is signalled if the corresponding discard signals (DS1,DS2) differ.

12. Policing device according to any of the claims 8 to 10, characterized in that said policing device is tested by activating in parallel with an instance (PA1) of a policing algorithm associated to a composite stream including a particular information stream, an instance (PA2) of a policing algorithm associated to a composite stream not including said particular information stream, both said instances (PA1, PA2) performing a same algorithm based on a same characteristic and in that a fault condition (FAULT) is signalled if the corresponding discard signals (DS1,DS2) differ.

13. Policing device according to any of the previous claims, characterized in that said predetermined characteristic is a maximal datarate and that said policing algorithm sets said discard signal if the datarate of the information units in its associated intermediate information stream exceeds said maximal datarate.

14. Policing method including a plurality of policing steps in each of which an instance of a policing algorithm is applied to information units included in a particular information stream in order to check wether or not one of said information units is to be discarded dependent upon predetermined network policing requirements, and at least one of said steps consisting in deriving from a composite stream, consisting of information units included in a plurality of information streams chosen according to said predetermined requirements, a policed information stream having at least one characteristic corresponding to said predetermined requirements by applying an instance (PA1;..;PAN) of a policing algorithm based on said characteristic to said composite stream in order to derive a discard signal (DS1;..;DSN) associated to said information units and by discarding based on said discard signal a corresponding information unit from said composite stream, said policed stream consisting of all not-discarded information units and said plurality of information streams including said particular information stream.
